(19) Europäisches Patentamt / European Patent Office / Office européen des brevets

(11) **EP 3 217 191 B1**

(12) **EUROPEAN PATENT SPECIFICATION**

(45) Date of publication and mention
of the grant of the patent:
**12.05.2021 Bulletin 2021/19**

(51) Int Cl.:
*G01S 17/46* (2006.01)          *G01S 17/931* (2020.01)
*G01S 7/481* (2006.01)          *G01S 7/497* (2006.01)

(21) Application number: **16465507.8**

(22) Date of filing: **08.03.2016**

(54) **DISTANCE MEASURING APPARATUS AND METHOD FOR MEASURING A DISTANCE**

DISTANZMESSUNGSVORRICHTUNG UND VERFAHREN ZUR MESSUNG EINER DISTANZ

APPAREIL ET PROCÉDÉ POUR MESURER UNE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2017 Bulletin 2017/37**

(73) Proprietor: **Continental Automotive GmbH
30165 Hannover (DE)**

(72) Inventor: **Pahontu, Nicolae
405100 Campia Turzii (RO)**

(74) Representative: **Continental Corporation
c/o Conti Temic microelectronic GmbH
Intellectual Property
Sieboldstraße 19
90411 Nürnberg (DE)**

(56) References cited:
EP-A1- 2 669 707          CN-A- 102 778 196
US-A1- 2008 273 758          US-A1- 2009 065 695
US-A1- 2012 256 764

• MING-CHIH LU ET AL: "Image-Based System for
Measuring Objects on an Oblique Plane and Its
Applications in 2-D Localization", IEEE
SENSORS JOURNAL, IEEE SERVICE CENTER,
NEW YORK, NY, US, vol. 12, no. 6, 1 June 2012
(2012-06-01), pages 2249-2261, XP011442615,
ISSN: 1530-437X, DOI:
10.1109/JSEN.2012.2186438

**Description**

The present invention relates to a distance measuring apparatus and a method for measuring a distance. In particular, the present invention relates to a distance measuring in the environment of a vehicle. The present invention further relates to an advanced driver assistance system and a vehicle comprising a distance measuring apparatus.

Prior art

Modern vehicles comprise systems for assisting a driver when driving the vehicle, or systems for a full automated driving of the vehicle. It is for this purpose that the vehicle comprises a plurality of sensors for sensing the environment of the vehicle. Such sensors may comprise, for instance, sensors for detecting objects or other vehicles in the environment of the ego-vehicle. If an object or another vehicle is detected in the environment of the ego-vehicle, these sensors may also determine a distance between the detected object and the ego-vehicle.

Such sensors may comprise, for instance, radar, LiDAR or stereo camera sensors. Radar sensors use radio waves, and for an accurate angular localization of another object, multiple complex antennas are needed. Stereo cameras use a triangulation for calculating a distance to another object. Such a camera uses two images which are captured by two different image sensors with a known position one from another. LiDAR sensors usually use short laser light impulses to measure the time of flight for the emitted light. Usually, infrared light is used to avoid visual disturbances from the roads. The sensors used in a radar sensor or a stereo camera are usually very expensive. Further, radar sensors are limited in determining an angular position. In order to detect an object by means of a stereo camera, complex detection and measuring algorithms are needed. Hence, this solution requires a large computational effort. LiDAR sensors are limited to short distances, for instance 15-20 meters, due to the power of the lasers which are used for creating the laser beams. XP11442615 describes an image-based system for measuring objects on an oblique plane and its application in 2-D localization.

Hence, there is a need for an enhanced distance measuring. In particular, there is a need for a distance measuring which can be realized by simple hardware components. Further, there is need for a distance measuring which provides a reliable distance measuring.

Disclosure of the invention

The present invention provides a distance measuring apparatus according to independent claim 1 and a method for measuring a distance according to independent claim 12. An idea underlying the present invention is to emit two well-known light beams each having a predetermined wavelength. The wavelength of the first light beam is different from the wavelength of the second light beam. Each of these light beams projects a light spot on an object. These light spots are captured by a camera and based on the light spots in the captured image data a distance between the camera and the object is determined. Because of the emitting of two light beams at different wavelengths, it is easy to differentiate between the image area illuminated by the first light beam and the image area illuminated by the second light beam. If the field of view of the camera is always the same, the distance between the two light spots (corresponding to the number of pixels between the light spots in the image data) is larger, if the object is close to the camera. If the object is far away from the camera, the distance between the two light spots in the captured image is shorter. If the orientation of the two light beams emitted by the light source is well-known, and the distance between the two light sources emitting the light beams and the size of the captured image are also known, it is possible to compute the distance between the camera and the illuminated object based on the number of pixels between the two light spots in the captured image data.

In this way, a reliable method for determining a distance can be provided. Since the number of pixels between the detected light spots in the image data directly corresponds to the distance of the object, the distance to the object can be determined in a very simple way with a small computational effort. Hence, neither a complex processor for determining the distance nor expensive hardware for emitting the light source or capturing the image data is required. Consequently, a very reliable determining of a distance can be achieved in a simple and cheap way.

According to an embodiment of the distance measuring apparatus, the first light source and/or the second light source comprise a laser. A laser emits a light beam with a very small opening angle. Hence, the light spot projected on the object is very small.

According to a further embodiment, the first light beam is parallel to the second light beam. If the two light beams are parallel, the distance between the two light spots which are projected on the object is always the same. In particular, this distance of the light spots on the object and the distance between the first light source and the second light source is always the same. Hence, a determination of the distance between the camera and the illuminated object can be simplified. Otherwise, if the first light beam has a well-known orientation with respect to the second light beam, the variation of the distance between the two light beams with respect to the distance to the camera has to be considered when computing the distance between the camera and the object.

According to a further embodiment, the first light source and the second light source are adapted to emit light beams only within an integration of the camera. In this way, the time period for emitting light can be reduced. Consequently, less energy is emitted to the environment and the emitted light is less annoying to persons in the environment.

According to a further embodiment, the first light source and the second light source are adapted to emit the light beams in a predetermined time sequence. Accordingly, the light emitted by the light source can be further reduced. Additionally, it is possible to correlate the emitting of the light beams with the camera and/or the processing unit. In this way, it is possible to enhance the identification of the image areas illuminated by the light beams of the first and the second light source.

According to a further embodiment, the first light source and the second light source are adapted to project a predetermined light pattern. For instance, the light pattern may comprise one or more stripes or patterns with a predefined shape, for instance a rectangle, a circle, etc. In this way, it is possible to increase the reliability for identifying image areas on which the first and the second light beams are projected.

According to a further embodiment of the method for measuring a distance, the step for emitting the first light beam and the second light beam are synchronized to the capturing of the image. In this way, it is possible to enhance the reliability for identifying the light beams in the captured image data.

According to a further aspect, the present invention provides an advanced driver assistance system comprising a distance measuring apparatus of the present invention.

According to a further aspect, a vehicle comprising a distance measuring apparatus according to the present invention is provided.

According to an embodiment of the vehicle, the light beam of the first light source and the light beam of the second light source are parallel with respect to a ground. In this way, a distance measurement for a very high range can be achieved.

According to an alternative embodiment of the vehicle, the light beam of the first light source and light beam of the second light source are tilted with respect to a roadway of the vehicle. In this way, the light beams usually cross the roadway at a predetermined distance. Based on this knowledge, it is possible to verify the operation of the distance measuring apparatus. Further, it may be possible to perform a calibration of the system.

According to a further embodiment, the method comprises a transforming step for transforming the captured image data to image data having constant image dimension. In particular, the pixels have a constant image dimension with respect to a plane perpendicular to a central optical axis of the camera.

Brief description of the drawings

The present invention will be described in the following based on the embodiments of the accompanying schematic drawings, wherein:

Figure 1: a schematic drawing of a distance measuring apparatus according to an embodiment;

Figure 2: a vehicle with a distance measuring apparatus according to an embodiment; and

Figure 3: a schematic a flowchart according to a method underlying a further embodiment of the present invention.

Description of embodiments

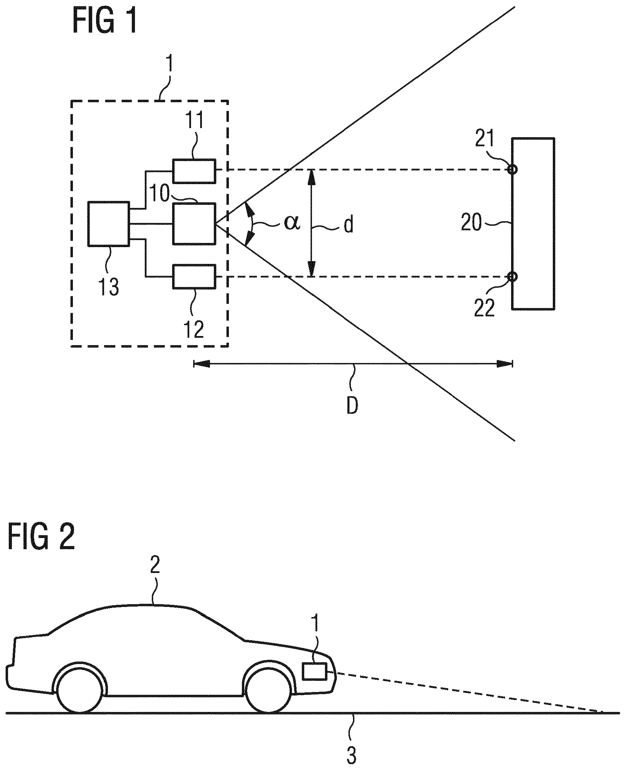

Figure 1 shows a schematic illustration of a distance measuring apparatus 1 according to an embodiment. The distance measuring apparatus 1 comprises a camera 10, a first light source 11, a second light source 12 and a processing unit 13. The camera 10 captures image data in a predetermined field of view. For instance, this field of view may have an opening angle $\alpha$ in horizontal direction. Camera 10 of the distance measuring apparatus 1 may be any appropriate camera for capturing image data. In particular, camera 10 may be a camera of an advanced driver assistance system (ADAS). Camera 10 may capture images in a visible wavelength spectrum. Additionally, or alternatively, camera 10 may also capture image data in an infrared or in ultraviolet spectrum. If the camera 10 is part of an ADAS, the camera may be mounted, for instance, behind a windshield of a vehicle. Alternatively, the camera may be also a camera capturing an area in the back of the vehicle, or a camera capturing another area in the environment of the vehicle.

The first light source 11 and the second light source 12 are arranged at a predetermined distance d from each other. For instance, the first light source 11 and the second light source 12 of the distance measuring apparatus 1 may be arranged on a plane, which is perpendicular to a main axis of the camera 10 of the image measuring apparatus 1. For instance, the first light source 11 and the second light source 12 may be also arranged behind a windshield of a vehicle, or alternatively in a bumper or any other part of the vehicle.

The first light source 11 emits a first light beam, and the second light source 12 emits a second light beam. The first light beam and the second light beam of the first light source 11 and the second light source 12 are directed towards the field of view of the camera 10. In this way, if the first light beam and the second light beam are directed towards an object, the camera 10 of the distance measuring apparatus 1 can recognize the light on this object 20, which is projected by the light beam of the first source 11 and/or the second light source 12.

Accordingly, as can be seen, for instance in Figure 1, the first light beam causes a first spot 21 on the object 20 and the second light beam causes a second spot 22 on the object 20. The second light beam has a fixed orientation with respect to the first light beam. In this way, if the orientation of the second light beam with respect to the first light beam is known, it is possible to determine the distance between the first spot 21 and the second spot 22 depending on the distance between the light sources 11 and 12 and the object 20. Preferably, the second light beam is parallel to the first light beam. In this way, the distance between the first light beam and the second light beam, and consequently between the first spot 21 and the second spot 22 is always the same, namely the distance d between the first light source 11 and the second light source 12.

The first light source 11 and the second light source 12 may comprise a laser. The output power of the lasers in the first light source 11 and the second light source 12 may be limited to a predetermined maximum output power. In this way, the impairment to persons or objects in the environment of the distance measuring apparatus 1 can be avoided. A laser beam usually has only a very small opening angle. Accordingly, the spots 21 and 22 on the object 20 are relative small. However, any other light source for emitting a light beam may be also possible.

The first light source 11 and the second light source 12 may emit light beams with a predetermined wavelength or a predetermined wavelength spectrum. If the wavelength or the wavelength spectrum, which is emitted by the first light source 11 and the second light source 12, is well-known, the spots 21 and 22 on an object 20 can be easily identified as the spots which are created by the first light source 11 or the second light source 12. For instance, a same wavelength or a same wavelength spectrum may be used for the light beams which are emitted by the first light source 11 and the second light source 12. Alternatively, it is also possible to use different wavelength or different wavelength spectrums for the light beam of the first light source 11 and the light beam of the light source 12. In this way, it is possible to differentiate between a spot 21, which is created by the light of the first light source 11 and a spot 22, which is created by the second light source 12.

Instead of emitting only a simple light beam, which causes a small circular spot 21 or 22, it is also possible that the first light source 11 and the second light source 12 may emit a light beam creating a particular pattern on an object 20. For instance, the first light source 11 and the second light source 12 may emit a light beam projecting a single line or a plurality of (parallel) lines on the object 20. The first light source 11 and the second light source 12 may also emit light beams creating another pattern on the object 20. For instance, the light beams may create a circle, a rectangle, a star or any other pattern. The first light source 11 and the second light source 12 may emit light beams having the same pattern or different patterns. In order to create such pattern, a mask may be arranged in front of the first light source 11 and the second light source 12. Alternatively, it is also possible to deflect the light beams by means of a mirroring unit (not shown) which is arranged in front of the first light source 11 and the second light source 12. In particular, a deflecting unit employing micro mirrors may be used.

In order to further limit the output power of the first light source and the second light source, the emitting of the light beams may be limited to a time period corresponding to the integration time of the camera 10. Out of the integration time of the camera 10, no light may be emitted by the first light source 11 and the second light source 12. For this purpose, the first light source 11 and the second light source 12 may be enabled only during the integration time of the camera 10 and may be disabled in the remaining time period. Alternatively, emitting of a light beam from the first light source 11 and the second light source 12 may be prevented by means of a shutter unit or another device.

The first light source 11 and the second light source 12 may emit light for each image which is captured by camera 10. Alternatively, the first light source 11 and the second light source 12 of the distance measuring apparatus 1 may emit light beams only in predetermined time intervals. For instance, a light beam may be emitted only for capturing single image, and subsequently, a predetermined number of frames/images are captured by camera 10 without emitting a light beam. In this case, the first light source 11 and the second light source 12 may emit the first light beam and the second light beam simultaneously. Alternatively, it may also possible to emit the first light beam and the second light beam when capturing different frames by camera 10. In order to clearly assign a light spot or a light pattern to the light beam of the corresponding light source 11, 12, it is possible to apply any appropriate synchronization between the emitting of light beams by the first light source 11 and the second light source 12 and the image data captured by camera 10.

After camera 10 has captured an image/frame comprising light spots 21, 22 which are caused by the light beams of the first light source 11 and/or the second light source 12, the corresponding image data are provided to processing unit 13. Before providing the image data to processing unit 13, the image data created by camera 10 may be preprocessed in order to remove disturbances, such as lens disturbances etc. Otherwise, if the disturbances are not removed by a preprocessing, these disturbances have to be considered when analyzing the image data by processing unit 13.

After obtaining the image data of camera 10, the processing unit 13 identifies a first image area in the obtained image data corresponding to the spot 21 illuminated by the first light beam. Further, a second image area is identified in the obtained image data corresponding to the spot 22 illuminated by the second light beam. The first image area and the second image area comprise at least one pixel. However, depending on the resolution of the camera and the diameter of the light beams, the first image area and the second image area may also comprise a plurality of pixels. If the first image area and/or the second image area comprise a plurality of pixels, a center pixel of the respective image area may be identified. Alternatively, the further processing may be also based on the pixel of the identified image area having the highest intensity. Any further scheme for identifying a main pixel in the image area may be possible, too.

The identification of the first image area and the second image area may take into account the particular wavelength or wavelength spectrum of the light emitted by the first light source 11 and the second light source 12. The identification may also take into account an identification of particular pattern created by the first light source 11 and the second light source 12. Additionally, the identification may also consider any further feature of the light beam and/or synchronization in time between the emitting of the light beams and the capturing of the image data by camera 10. In this way, it is possible to differentiate between spots 21, 22 created by the light beams of the first light source 11 and the second light source 12 and other light spots created by further light sources, for instance spots created by adjacent distance measuring apparatuses, or other devices.

After having identified a first image area corresponding to a spot 21 created by the first light beam and a second image area corresponding to a spot 22 created by the second light beam, a number of pixels between the first image area and the second image area is calculated. If the first image area and/or the second image area comprise more than one pixel, a particular "main" pixel may be taken into account for calculating the number of pixels between the first image area and the second image area. Based on the calculated number of pixels between the first image area and the second image area, a distance D between the camera 10 and the object 20 can be calculated as explained in the following.

At a distance D from camera 10, the width W of the captured image is $W = 2*D* \tan \alpha/2$, wherein $\alpha$ is the optical angle of the camera 10. In the following it will be assumed that the first light beam and the second light beam are parallel. Otherwise, a deviation of the distance between the first light beam and the second light beam depending on the distance from the camera has to be taken into account. However, if the two light beams are parallel and have a distance d, the number of pixels between the senders of the first image area and the second image area may be calculated by the following formula:

$$N_P(D) = d/((2*D*\tan(\alpha/2))/N_h),$$

wherein $N_h$ is the total number of horizontal pixels in the image data provided by camera 10. Accordingly, when the number of pixels $N_P$ between the center of the first image area and the second image area is known, and the opening angle $\alpha$ of the camera 10, the number $N_h$ of horizontal pixels of the image data provided by camera 10 and the distance d between the first light source 11 and the second light source 12 are also known, the distance D between the camera 10 and the object 20 can be calculated to:

$$D = (d*N_h)/(2*N_p*\tan(\alpha/2)).$$

Based on this formula, the distance between camera 10 and object 20 can be determined based on the calculated number of pixels between the first image area and the second image area and the predefined parameters d, $N_h$ and $\alpha$.

In the previous example it was assumed that optical distortions of camera 10 were corrected in the captured images. As a result of the corrected image data, a constant pixel density of the camera can be obtained. In the resulting constant pixel density a same number of pixels is provided for a predetermined angle segment. For example a constant number of pixels may be obtained per angular degree over the entire optical angle, $\alpha$ which is covered by the camera 10.

In this case the images can be further scaled in order to obtain a constant pixel dimension in a plane which is perpendicular oriented to a central optical axis of the camera 10. In this way, a distance between areas relating to adjacent pixels is the same, if the distance between the camera and the areas is the same.

Further, distortions may appear due to an optical mounting. This is very likely for cameras having a wide field of view and/or cameras with simple and inexpensive lenses. In such cases, the pixel dimensions of a flat scene oriented perpendicular to the optical axis may vary within the field of view. For example, the pixels situated in the center of the image cover smaller dimensions compared to the pixels situated close to the edge such as pixels situated under a certain angle with respect to the optical axis of the camera. Such distortions can be measured in a calibration processes during camera production. The generated correction parameters can be used afterwards to eliminate the distortions within the captured images, or to scale the pixels in the image.

In order to further reduce the computational effort for determination of the distance D, a table can be pre-computed for storing the correlation between the number of pixels between the first image area and the second image area and the distance between camera 10 and object 20. In this way, by searching in such a table for the corresponding number of pixels, a fast determination of the distance D can be achieved.

In the above described example, the first light source 11 and the second light source 12 are arranged on an axis which is parallel to a line of horizontal pixels in the image data captured by camera 10. Otherwise, the computation of the distance based on a number of pixels between the first image area and the second image area in the captured image data has to be adapted accordingly.

The previous explanation is based on the assumption that the images were previously corrected to obtain a constant pixel dimension over the entire field of view, in particular when the scene, perpendicular oriented to the optical axis of the camera sensor, is planar. Alternatively, it is not mandatory necessary that the images have to be corrected a priori. Moreover, it is also possible to take in consideration the correction parameters during the computation process for computing the distance between the camera and the object. For this purpose, an individual distance between adjacent pixels in the image portion may be taken into account. However, any further approach for compensating image disturbances, in particular for considering variations in the corresponding distances of adjacent image pixels is possible, too.

The determination of a distance can be used, for instance, in a vehicle for measuring a distance to a vehicle or an object in front of the ego-vehicle. Alternatively, the distance to an object or a vehicle behind the ego-vehicle can be measured, too. Another example for a use case in the vehicle is calculating the distance to an object or a vehicle that is driven on the lateral lane versus ego-vehicle. Particular examples could be, for instance, measuring a distances from an ego-vehicle to the guard rails, tunnel walls, etc. The information of the distance can be provided to an advanced driver assistance system or any other system for a partial or complete automated driving of the vehicle. However, the distance measuring apparatus 1 is not limited to an application in a vehicle. Any further application, for instance in a plane, ship or even in a stationary device is also possible.

Even though the previous explanation is based on a single beam emitted by the first light source and a single light beam emitted by the second light source 12, the present invention is not limited to a single light beam emitted by each light source 11, 12. Moreover, each light source 11, 12 may also emit a plurality of light beams. In this case each light beam emitted by the first light source 11 has a corresponding light beam which is emitted by the second light source 12. In particular, the orientation of each light beam emitted by the first light source 11 and the corresponding light beam emitted by the second light source 12 is the same. Preferably, each light beam emitted by the first light source 11 has a corresponding parallel light beam which is emitted by the second light source 12. For instance, the plurality of light beams emitted by the first light source 11 and the second light source 12 may be provided by beam splitter. However, any further device for providing a plurality of light beams may be possible, too. The plurality of light beams may be emitted all at the same time. Alternatively, it is also possible that the plurality of light beams are emitted subsequently, wherein only a single light beam of the first light source and a corresponding single light beam of the second light source are emitted at the same time.

For example, each light source 11, 12 may emit three light beams. A first light beam may be directed in parallel to the main axis of camera 10. A second light beam may have a horizontal deviation with a particular angle to the left and a third light beam may have horizontal deviation, for instance, having a same deviation to the right. However, the present invention is not limited to the example of three light beams for each light source 11, 12. Moreover, any other number of light beams, for instance two, five, eight, ten, etc. may be possible, too. By using more than a single light beam for each light source 11, 12, the accuracy for determining a distance can be increased. Further, it may be also possible to detect even smaller objects, if the number of light beams is increased.

Even though, the present invention is described in connection with two light sources, namely a first light source 11 and a second light source 12, the present invention is not limited to only two light sources 11, 12. Moreover, more than two light sources may be also used for emitting light beams. If more than two light sources are used for emitting light beams, corresponding light beams of all light sources are parallel or at least have a fixed orientation with respect to each other.

Figure 2 shows a vehicle 2 comprising a distance measuring apparatus 1 according to an embodiment. As can be seen in this figure, vehicle 2 is located on a roadway 3. As can be further seen in this figure, the light beams of the first and the second light source 11, 12 are tilted with respect to the roadway 3. Accordingly, if the roadway 3 is flat, the light beams cross the surface of the roadway at a predetermined distance. In this case, the measuring of a distance is limited to the distance where the light beams cross the surface of the roadway 3. Accordingly, if no object is located in the area between the vehicle 2 and the distance where the light beams cross the surface of the roadway 3, distance measuring apparatus 1 will detect the spots of the first and the second light beam at this distance. Hence, if the distance measuring apparatus 1 detects such a predetermined distance, this will indicate, that no object is located in the area between the vehicle 2 and the position where the light beams cross the roadway 3. Since the distance measuring apparatus 1 can always detect the spots of the light beams emitted by the first and the second light source 11, 12, even when no object is located in front of the vehicle 2, it is possible to verify the proper functionality of the distance measuring apparatus 1. Hence, if the distance measuring apparatus 1 does not detect a spot of the first and the second light beam, this may indicate a malfunction of the distance measuring apparatus 1. Further, if a distance is measured, which is larger than the predetermined distance between the vehicle 2 and the position where the light beams cross the roadway 3, this **could** be also an indication for an error. In these cases, an indication of an error can be generated in order to indicate a subsequent device that the output of the distance measuring apparatus 1 is not reliable.

Further to this, if it is determined that the vehicle 1 is in a horizontal position and the roadway 3 in front of the vehicle is flat, the distance measuring apparatus 1 can be calibrated by detecting the spots of the first and the second light beam at the predetermined, known distance in front (or behind) the vehicle.

Alternatively, it may be also possible that the first and the second light source 11, 12 emit light beams which are parallel to the crowned (and the roadway 3). In this case, the distance in front of the distance measuring apparatus 1 is only limited by the output power of the light sources 11, 12.

In order to increase the capability for recognizing the spots which are illuminated by the light beams emitted by the first and the second light source 11, 12, the output power of the light sources 11, 12 can be adapted. For instance, the output power of the light sources 11, 12 can be adapted depending on the light intensity of the environment. For instance, an additional light sensor may be used for adapting the output power of the light sources 11, 12. Further, it may be also possible to adapt the output power of the light sources 11, 12 depending on the image data provided by camera 10. If processing unit 13 cannot detect an image area corresponding to an emitted light beam, the output power of the light sources 11, 12 may be increased. Otherwise, if the intensity of a detected area corresponding to a light source is very high, the output power of the light sources 11, 12 can be decreased. In this way, it is possible to limit the output power of the light sources 11, 12 to an appropriate output power. Hence, the energy consumption and the environmental disturbances can be reduced.

In order to further increase the reliability of the distance measurement of a distance measuring apparatus 1, a determined distance can be compared with a previous measurement. If a difference between a measured distance and a previously measured distance is less than a predetermined threshold value, such a measured distance can be considered as a reliable distance. Otherwise, if the amount of a currently measured distance and a previously measured distance is larger than the predetermined threshold value, such a measured distance may be considered as less reliable.

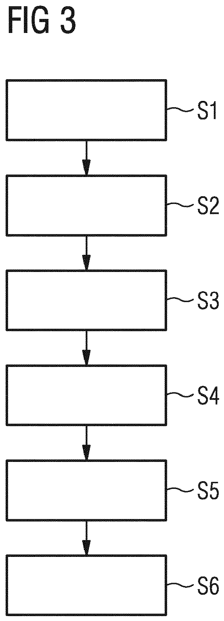

Figure 3 shows a flowchart for a method for measuring a distance according to an embodiment. The method comprises a step S1 for emitting a first light beam and a second step S2 for emitting a second light beam. The first light beam and the second light beam may be emitted in parallel. The first light beam has a fixed orientation with respect to the second light beam. In particular, the first and the second light beam may be parallel light beams. The second light beam is emitted at a predetermined distance from the position where the first light beam is emitted. For instance, the first light beam may emitted by a first light source 11, which is located at a predetermined distance from a second light source 12 for emitting the second light beam. In step S3 image data are captured by a camera in a predetermined field of view. In this way, the image is processed to obtain the constant pixel dimension over the entire field of view.

After the image data has been captured and processed, a first image area is identified in step S4 in the captured image data corresponding to an area illuminated by the first light beam. Further, a second image area is identified in the captured image data, wherein the second image area corresponds to an area illuminated by the second light beam. In step S5, a number of pixels between the first image area and the second image area is calculated. In particular, the number of pixels between the center of the first image area and the center of the second image area is calculated. In step S6, a distance between the camera and an object illuminated by the first and the second light beam is determined. The determination of the distance is based on the calculated number of pixels between the first image area and the second image area. This determination can be performed, for instance, by applying the above described formula. Alternatively, a lookup table may be also used for determining the distance based on the calculated number of pixels between the first and the second image area. In the following, such a table is shown.

| α | 53.14 | 53.14 | 53.14 | 53.14 | 53.14 | 53.14 |
|---|---|---|---|---|---|---|
| distance D (m) | 2.00 | 5.00 | 10.00 | 20.00 | 30.00 | 40.00 |
| Image Width W (m) at distance D | 2.00 | 5.00 | 10.00 | 20.00 | 30.01 | 40.01 |
| Pixel Dimension(mm)at D($N_h$= 1920pix) | 1. 04 | 2.60 | 5.21 | 10.42 | 15.63 | 20.84 |
| Nr. pixels Np at D (distance between light beams = 1000mm) | 960 | 384 | 192 | 96 | 63 | 48 |

The table shows the correspondence between a distance D between the camera 10 and the object 20 and the number of pixels between the identified first and second image area. This table is based on a distance between the first and the second light source of one meter and an opening angle of the camera of 53.14 degrees. Further, it is assumed that the image data provided by the camera comprises 1980 horizontal pixels, and the pixel dimension is constant on the entire field of view for a flat scenes perpendicular on the optical axis. However, such a table can be also computed for all other kind of configuration.

In order to further enhance the identification of the image areas corresponding to the emitted light beams, the emitting of the first light beam and the second light beam can be synchronized with the capturing of the image data by camera 10. Summarizing, the present invention relates to a measuring of a distance. For this purpose, it is proposed to emit at least two parallel light beams. The wavelength of the first light beam is different from the wavelength of the second light beam. Each of the light beams projects a spot on an object. A camera captures the light spots caused by the light beams. Because of the emitting of the light beams at different wavelengths, it is easy to differentiate between the image area illuminated by the first light beam and the image area illuminated by the second light beam. Based on a number of pixels between the two spots on the object in the captured image data, a distance between the camera and the object can be determined.

**Claims**

1. A distance measuring apparatus (1), comprising:

   a camera (10), adapted to capture image data in a predetermined field of view;
   a first light source (11), adapted to emit a first light beam towards the field of view of the camera (10) ;
   a second light source (12), adapted to emit a second light beam towards the field of view of the camera (10), the second light beam having a fixed orientation with respect to the first light beam, and the second light source (12) being located at a predetermined distance from the first light source (11); and
   a processing unit (13) adapted to

   - receive the image data captured by the camera (10),
   - identify a first image area in the received image data corresponding to an area illuminated by the first light beam and a second image area in the received image data corresponding to an area illuminated by the second light beam,
   - calculate a number of pixels between the first image area and the second image area, and
   - determine a distance between the camera and an object illuminated by the first light beam and the second light beam based on the calculated number of pixels between the first image area and the second image area,

   wherein the first light source (11) and the second light source (12) are adapted to emit light beams having a predetermined wavelength,
   **characterized in that**
   the wavelength of the first light beam is different from the wavelength of the second light beam.

2. The distance measuring apparatus (1) according to claim 1, wherein the first light source (11) and the second light (12) source comprise a laser.

3. The distance measuring apparatus (1) according to claim 1 or 2, wherein the first light beam being parallel to the second light beam.

4. The distance measuring apparatus (1) according to any of claims 1 to 3, the first light source (11) and the second light source (12) are adapted to emit light beams only within an integration time of the camera (10) .

5. The distance measuring apparatus (1) according to any of claims 1 to 4, wherein the first light source (11) and the second light source (12) are adapted to emit the light beams in a predetermined time sequence.

6. The distance measuring apparatus (1) according to any of claims 1 to 5, wherein the first light source (11) and the second light source (12) are adapted to project a predetermined light pattern.

7. The distance measuring apparatus (1) according to any of claims 1 to 6, the first light source (11) and the second light source (12) are adapted to emit a plurality of light beams, wherein each light beam emitted by the first light source (11) has a fixed orientation with respect to a corresponding light beam emitted by the second light source (12).

8. An advanced driver assistance system comprising a distance measuring apparatus (1) according to any of claims 1 to 7.

9. A vehicle (2) comprising a distance measuring apparatus (1) according to any of claims 1 to 7.

10. The vehicle (2) according to claim 9, wherein the light beam of the first light source (11) and the light beam of the second light source (12) are parallel with respect to a ground.

11. The vehicle (2) according to claim 9, wherein the light beam of the first light source (11) and the light beam of the second light source (12) are tilted with respect to a roadway (3) of the vehicle (2).

12. A method for measuring a distance, comprising the steps:

emitting (S1) a first light beam;
emitting (S2) a second light beam, the second light beam having a fixed orientation with respect to the first light beam, and the second light beam is emitted at a predetermined distance from the position where the first light beam is emitted;
wherein the first light beam and the second light beam have a predetermined wavelength,
capturing (S3) image data in a predetermined field of view by a camera (10), wherein the emitted first and second light beams are directed towards the field of view of the camera (10);
identifying (S4) a first image area in the captured image data corresponding to an area illuminated by the first light beam and a second image area in the captured image data corresponding to an area illuminated by the second light beam;
calculating (S5) a number of pixels between the first image area and the second image area and
determining (S6) a distance between the camera (10) and an object (20) illuminated by the first light beam and the second light beam based on the calculated number of pixels between the first image area and the second image area,
the method is **characterized in that**
the wavelength of the first light beam is different from the wavelength of the second light beam.

13. The method according to claim 12, wherein the emitting (S1, S2) of the first light beam and the emitting of the second light beam are synchronized to the capturing (S3) of the image data.

14. The method according to claim 11 or 12, further comprising a transforming step for transforming the captured image data to image data having constant image dimension, in particular, a constant image dimension with a plane perpendicular to an central optical axis of the camera (10).

**Patentansprüche**

1. Distanzmessungsvorrichtung (1), umfassend:

eine Kamera (10), die dazu ausgelegt ist, in einem vorgegebenen Sichtfeld Bilddaten zu erfassen;
eine erste Lichtquelle (11), die dazu ausgelegt ist, einen ersten Lichtstrahl hin zu dem Sichtfeld der Kamera (10) auszusenden;
eine zweite Lichtquelle (12), die dazu ausgelegt ist, einen zweiten Lichtstrahl hin zu dem Sichtfeld der Kamera (10) auszusenden, wobei der zweite Lichtstrahl eine feststehende Ausrichtung in Bezug auf den ersten Lichtstrahl aufweist und die zweite Lichtquelle (12) sich in einem vorgegebenen Abstand von der ersten Lichtquelle (11) befindet; und
eine Verarbeitungseinheit (13), die für Folgendes ausgelegt ist:

- Empfangen der durch die Kamera (10) erfassten Bilddaten,
- Ermitteln eines ersten Bildbereichs in den empfangenen Bilddaten, der einem durch den ersten Lichtstrahl beleuchteten Bereich entspricht, und eines zweiten Bildbereichs in den empfangenen Bilddaten, der einem durch den zweiten Lichtstrahl beleuchteten Bereich entspricht,
- Berechnen einer Anzahl von Pixeln zwischen dem ersten Bildbereich und dem zweiten Bildbereich und
- Bestimmen eines Abstands zwischen der Kamera und einem durch den ersten Lichtstrahl und den zweiten Lichtstrahl beleuchteten Objekt basierend auf der berechneten Anzahl von Pixeln zwischen dem ersten Bildbereich und dem zweiten Bildbereich,

wobei die erste Lichtquelle (11) und die zweite Lichtquelle (12) dazu ausgelegt sind, Lichtstrahlen mit einer vorgegebenen Wellenlänge auszusenden,
**dadurch gekennzeichnet, dass**
die Wellenlänge des ersten Lichtstrahls anders ist als die Wellenlänge des zweiten Lichtstrahls.

2. Distanzmessungsvorrichtung (1) nach Anspruch 1, wobei die erste Lichtquelle (11) und die zweite Lichtquelle (12) einen Laser umfassen.

3. Distanzmessungsvorrichtung (1) nach Anspruch 1 oder 2, wobei der erste Lichtstrahl parallel zu dem zweiten Lichtstrahl ist.

4. Distanzmessungsvorrichtung (1) nach einem der Ansprüche 1 bis 3, wobei die erste Lichtquelle (11) und die zweite Lichtquelle (12) dazu ausgelegt sind, Lichtstrahlen nur innerhalb einer Integrationszeit der Kamera (10) auszusenden.

5. Distanzmessungsvorrichtung (1) nach einem der Ansprüche 1 bis 4, wobei die erste Lichtquelle (11) und die zweite Lichtquelle (12) dazu ausgelegt sind, die Lichtstrahlen in einer vorgegebenen zeitlichen Abfolge auszusenden.

6. Distanzmessungsvorrichtung (1) nach einem der Ansprüche 1 bis 5, wobei die erste Lichtquelle (11) und die zweite Lichtquelle (12) dazu ausgelegt sind, ein vorgegebenes Lichtmuster zu projizieren.

7. Distanzmessungsvorrichtung (1) nach einem der Ansprüche 1 bis 6, wobei die erste Lichtquelle (11) und die zweite Lichtquelle (12) dazu ausgelegt sind, eine Mehrzahl von Lichtstrahlen auszusenden, wobei jeder durch die erste Lichtquelle (11) ausgesendete Lichtstrahl eine feststehende Ausrichtung in Bezug auf einen entsprechenden durch die zweite Lichtquelle (12) ausgesendeten Lichtstrahl aufweist.

8. Höher entwickeltes Fahrerassistenzsystem, das eine Distanzmessungsvorrichtung (1) nach einem der Ansprüche 1 bis 7 umfasst.

9. Fahrzeug (2), das eine Distanzmessungsvorrichtung (1) nach einem der Ansprüche 1 bis 7 umfasst.

10. Fahrzeug (2) nach Anspruch 9, wobei der Lichtstrahl der ersten Lichtquelle (11) und der Lichtstrahl der zweiten Lichtquelle (12) in Bezug auf einen Boden parallel sind.

11. Fahrzeug (2) nach Anspruch 9, wobei der Lichtstrahl der ersten Lichtquelle (11) und der Lichtstrahl der zweiten Lichtquelle (12) in Bezug auf eine Fahrbahn (3) des Fahrzeugs (2) geneigt sind.

12. Verfahren zur Messung einer Distanz, das die folgenden Schritte umfasst:

   Aussenden (S1) eines ersten Lichtstrahls;
   Aussenden (S2) eines zweiten Lichtstrahls, wobei der zweite Lichtstrahl eine feststehende Ausrichtung in Bezug auf den ersten Lichtstrahl aufweist und der zweite Lichtstrahl mit einem vorgegebenen Abstand von der Position, wo der erste Lichtstrahl ausgesendet wird, ausgesendet wird;
   wobei der erste Lichtstrahl und der zweite Lichtstrahl eine vorgegebene Wellenlänge aufweisen,
   Erfassen (S3) von Bilddaten in einem vorgegebenen Sichtfeld durch eine Kamera (10), wobei der erste und zweite Lichtstrahl, die ausgesendet werden, hin zu dem Sichtfeld der Kamera (10) gerichtet sind;
   Ermitteln (S4) eines ersten Bildbereichs in den erfassten Bilddaten, der einem durch den ersten Lichtstrahl beleuchteten Bereich entspricht, und eines zweiten Bildbereichs in den erfassten Bilddaten, der einem durch den zweiten Lichtstrahl beleuchteten Bereich entspricht;
   Berechnen (S5) einer Anzahl von Pixeln zwischen dem ersten Bildbereich und dem zweiten Bildbereich und
   Bestimmen (S6) eines Abstands zwischen der Kamera (10) und einem durch den ersten Lichtstrahl und den zweiten Lichtstrahl beleuchteten Objekt (20) basierend auf der berechneten Anzahl von Pixeln zwischen dem ersten Bildbereich und dem zweiten Bildbereich,
   wobei das Verfahren **dadurch gekennzeichnet ist, dass**
   die Wellenlänge des ersten Lichtstrahls anders ist als die Wellenlänge des zweiten Lichtstrahls.

13. Verfahren nach Anspruch 12, wobei das Aussenden (S1, S2) des ersten Lichtstrahls und das Aussenden des zweiten Lichtstrahls mit dem Erfassen (S3) der Bilddaten synchronisiert werden.

**14.** Verfahren nach Anspruch 11 oder 12, das ferner einen Umwandlungsschritt zum Umwandeln der erfassten Bilddaten in Bilddaten mit einer konstanten Bildabmessung, insbesondere einer konstanten Bildabmessung in Bezug auf eine Ebene, die senkrecht zu einer mittigen optischen Achse der Kamera (10) ist, umfasst.

## Revendications

**1.** Appareil pour mesurer une distance (1), comprenant :

une caméra (10) conçue pour capturer des données d'images dans un champ de vision prédéterminé ;
une première source lumineuse (11), conçue pour émettre un premier faisceau lumineux vers le champ de vision de la caméra (10) ;
une deuxième source lumineuse (12), conçue pour émettre un deuxième faisceau lumineux vers le champ de vision de la caméra (10) caméra, le deuxième faisceau lumineux ayant une orientation fixe relativement au premier faisceau lumineux, et le deuxième faisceau lumineux (12) étant situé à une distance prédéterminée de la première source lumineuse (11) ; et
une unité de traitement (13) conçu pour

- recevoir les données d'images capturées par la caméra (10),
- identifier une première zone d'image dans les données d'images reçues correspondant à une zone éclairée par le premier faisceau lumineux et une deuxième zone d'image dans les données d'images reçues correspondant à une zone éclairée par le deuxième faisceau lumineux,
- calculer un nombre de pixels entre la première zone d'image et la deuxième zone d'image, et
- déterminer une distance entre la caméra et un objet éclairé par le premier faisceau lumineux et le deuxième faisceau lumineux sur la base du nombre de pixels calculé entre la première zone d'image et la deuxième zone d'image,

la première source lumineuse (11) et la deuxième source lumineuse (12) étant conçues pour émettre des faisceaux lumineux ayant une longueur d'onde prédéterminée,
**caractérisé en ce que**
la longueur d'onde du premier faisceau lumineux est différente de la longueur d'onde du deuxième faisceau lumineux.

**2.** Appareil pour mesurer la distance (1) selon la revendication 1, la première source lumineuse (11) et la deuxième source lumineuse (12) comprenant un laser.

**3.** Appareil pour mesurer la distance (1) selon la revendication 1 ou 2, le premier faisceau lumineux étant parallèle au deuxième faisceau lumineux.

**4.** Appareil pour mesurer la distance (1) selon l'une quelconque des revendications 1 à 3, la première source lumineuse (11) et la deuxième source lumineuse (12) étant conçues pour émettre des faisceaux lumineux uniquement pendant un temps d'intégration de la caméra (10).

**5.** Appareil pour mesurer la distance (1) selon l'une quelconque des revendications 1 à 4, la première source lumineuse (11) et la deuxième source lumineuse (12) étant conçues pour émettre les faisceaux lumineux pendant une séquence temporelle prédéterminée.

**6.** Appareil pour mesurer la distance (1) selon l'une quelconque des revendications 1 à 5, la première source lumineuse (11) et la deuxième source lumineuse (12) étant conçues pour projeter un motif lumineux prédéterminé.

**7.** Appareil pour mesurer la distance (1) selon l'une quelconque des revendications 1 à 6, la première source lumineuse (11) et la deuxième source lumineuse (12) étant conçues pour émettre une pluralité de faisceaux lumineux, chaque faisceau lumineux émis par la première source lumineuse (11) ayant une orientation fixe relativement à un faisceau lumineux correspondant émis par la deuxième source lumineuse (12).

**8.** Système d'aide à la conduite avancé comprenant un appareil pour mesurer la distance (1) selon l'une quelconque des revendications 1 à 7.

9. Véhicule (2) comprenant un appareil pour mesurer la distance (1) selon l'une quelconque des revendications 1 à 7.

10. Véhicule (2) selon la revendication 9, le premier faisceau lumineux de la première source lumineuse (11) et le deuxième faisceau lumineux de la deuxième source lumineuse (12) étant parallèles relativement au sol.

11. Véhicule (2) selon la revendication 9, le premier faisceau lumineux de la première source lumineuse (11) et le deuxième faisceau lumineux de la deuxième source lumineuse (12) étant inclinés relativement à une route (3) du véhicule (2).

12. Procédé pour mesurer une distance, comprenant les étapes de :

émettre (S1) un premier faisceau lumineux ;
émettre (S2) un deuxième faisceau lumineux, le deuxième faisceau lumineux ayant une orientation fixe relativement au premier faisceau lumineux, et le deuxième faisceau lumineux étant émis à une distance prédéterminée de la position où le premier faisceau lumineux est émis ;
le premier faisceau lumineux et le deuxième faisceau lumineux ayant une longueur d'onde prédéterminée,
capturer (S3) des données d'image dans un champ de vision prédéterminé de la caméra (10), les premier et deuxième faisceaux lumineux émis étant dirigés vers le champ de vision de la caméra (10) ;
identifier (S4) une première zone d'image dans les données d'images capturées correspondant à une zone éclairée par le premier faisceau lumineux et une deuxième zone d'image dans les données d'images capturées correspondant à une zone éclairée par le deuxième faisceau lumineux ;
calculer (S5) un nombre de pixels entre la première zone d'image et la deuxième zone d'image, et
déterminer (S6) une distance entre la caméra (10) et un objet (20) éclairé par le premier faisceau lumineux et le deuxième faisceau lumineux sur la base du nombre de pixels calculé entre la première zone d'image et la deuxième zone d'image,
le procédé étant **caractérisé en ce que**
la longueur d'onde du premier faisceau lumineux est différente de la longueur d'onde du deuxième faisceau lumineux.

13. Procédé selon la revendication 12, l'émission (S1, S2) du premier faisceau lumineux et l'émission du deuxième faisceau lumineux étant synchronisées avec la capture (S3) des données d'images.

14. Procédé selon la revendication 11 ou 12, comprenant en outre une étape de transformation pour transformer les données d'images capturées en des données d'image ayant une dimension d'image constante, en particulier une dimension d'image constante relativement à un plan perpendiculaire à un axe optique central de la caméra (10).

FIG 1

FIG 2

FIG 3